(19) Europäisches Patentamt
European Patent Office
Office européen des brevets

(11) **EP 2 669 707 B1**

(12) **EUROPÄISCHE PATENTSCHRIFT**

(45) Veröffentlichungstag und Bekanntmachung des Hinweises auf die Patenterteilung:
**24.07.2019 Patentblatt 2019/30**

(51) Int Cl.:
**G01S 17/02** *(2006.01)*   **G01S 17/46** *(2006.01)*
**G01S 17/08** *(2006.01)*

(21) Anmeldenummer: **12169729.6**

(22) Anmeldetag: **29.05.2012**

(54) **Verfahren und handhaltbares Entfernungsmessgerät zur indirekten Entfernungsmessung mittels bildgestützter Winkelbestimmungsfunktion**

Method and hand-held distance measuring device for indirect distance measurement by means of image-based angle determination function

Procédé et appareil de mesure de distance pouvant être tenu à la main destinés à la mesure d'éloignement indirecte au moyen d'une fonction de détermination d'angle assistée par image

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**04.12.2013 Patentblatt 2013/49**

(73) Patentinhaber: **Leica Geosystems AG**
**9435 Heerbrugg (CH)**

(72) Erfinder: **Giger, Kurt**
**9464 Rüthi (CH)**

(74) Vertreter: **Kaminski Harmann**
**Patentanwälte AG**
**Landstrasse 124**
**9490 Vaduz (LI)**

(56) Entgegenhaltungen:
**EP-A1- 1 517 117      DE-A1-102006 054 324**
**DE-A1-102010 043 136**

**Beschreibung**

Die vorliegende Erfindung betrifft ein Verfahren zur indirekten Bestimmung von Distanzen mit einem handhaltbaren Entfernungsmessgerät mittels zweier direkt gemessener Distanzen und eines Winkels, wobei der Winkel aus einem von einer Kamera des Entfernungsmessgerätes aufgenommenen Panoramabild ermittelt wird. Die Erfindung betrifft ausserdem ein handhaltbares Entfernungsmessgerät mit einer Distanzmesseinheit und einer Kamera zur Ausführung des erfindungsgemässen Verfahrens.

Zur Ausführung des erfindungsgemässen Verfahrens werden gleichzeitig zu einer Vermessung der Entfernung zu zwei Raumpunkten von einer Bilderfassungseinheit Bilder von der Umgebung der Raumpunkte aufgenommen, die mittels Image-Stitching zu einem einzigen Panoramabild zusammengefügt werden oder auf andere Weise zueinander in Beziehung gesetzt werden, sodass aus den miteinander verknüpften Bildern eine Anzahl von Pixeln zwischen den beiden Raumpunkten ermittelbar ist. Aus dieser Anzahl von Pixeln kann ein Winkel ermittelt werden. Die gesuchte Entfernung zwischen den beiden Raumpunkten kann mit dem Kosinussatz errechnet werden. Ein erfindungsgemäßes handhaltbares Entfernungsmessgerät beinhaltet zu diesem Zweck eine Bilderfassungseinheit mit mindestens einer Kamera und eine Bildauswerteeinheit zum Zusammenfügen der Bilder und zum Ermitteln der Pixelanzahl.

In vielen Anwendungen werden Verfahren und Systeme zur Entfernungsmessung verwendet. Beispiele hierfür sind ausgesprochen präzise Vermessungen in geodätischen Applikationen, aber auch Messaufgaben im Bereich der Bauinstallation oder für industrielle Prozesssteuerungen.

Für diese Aufgaben werden stationäre, bewegbare oder auch handhaltbare Entfernungsmessgeräte eingesetzt, welche eine optische Entfernungsmessung zu einem ausgewählten Messpunkt ausführen. Zumeist wird hierbei ein Laserstrahl emittiert und nach Reflektion am Ziel wieder empfangen und ausgewertet. Zur Bestimmung der Entfernung stehen dabei verschiedene Messprinzipien zur Verfügung, wie z.B. Phasen- oder Laufzeitmessung.

Insbesondere im Bereich der Bauinstallation oder Bauabnahme werden tragbare und in der Hand zu haltende Geräte verwendet, welche bezüglich einer zu vermessenden Struktur angelegt werden und dann eine Entfernungsmessung zu einer Oberfläche durchführen. Ein für solche Anwendungen geeignetes und typisches handhaltbares Entfernungsmessgerät wird beispielsweise in der EP 0 738 899 und der EP 0 701 702 beschrieben.

Da für die meisten Anwendungen ein auf der anzumessenden Oberfläche sichtbarer Messpunkt vorteilhaft ist, werden zumeist rote Laser als Strahlungsquellen für die Entfernungsmessung verwendet. Mit Entfernungsmessern des Stands der Technik sind so bei grosser Handhabungsfreundlichkeit Genauigkeiten bis in den Millimeterbereich erzielbar. Mit derzeit erhältlichen handhaltbaren Entfernungsmessgeräten können Messungen von einem Punkt zu einem anderen Punkt durchgeführt werden, zu dem eine Sichtverbindung besteht. Wenn das Ziel verdeckt ist, können mittels eines Neigungssensors auch Horizontalmasse ermittelt werden.

Eine Möglichkeit zur Bestimmung einer Entfernung zwischen zwei Punkten, die auch anwendbar ist, wenn zwischen den Punkten keine Sichtverbindung besteht, ist die Berechnung mittels Trigonometrie. Dies ist bereits aus bodengestützten Vermessungsgeräten, wie Theodoliten oder Totalstationen, hinlänglich bekannt.

Zur trigonometrischen Ermittlung einer Entfernung a zwischen zwei Raumpunkten $B$ und $C$ genügt es, die Entfernung zu diesen zwei Punkten von einem dritten Punkt A zu kennen, und den Winkel $\alpha$ an Punkt A zwischen den Seiten b und c in Richtung der Punkte $B$ und $C$. Dann kann mittels des Kosinussatzes die Länge von a errechnet werden:

$$a = \sqrt{b^2 + c^2 - 2 \cdot b \cdot c \cdot \cos\alpha}$$

Mit einem herkömmlichen handhaltbaren Entfernungsmessgerät des Standes der Technik ist es zwar möglich, die Distanzen b und c zu den Raumpunkten B und C exakt zu messen, es fehlt aber in aller Regel an einer Funktion zur genauen und zuverlässigen Bestimmung des Winkels a. Heute in handhaltbaren Entfernungsmessgeräten, insbesondere bezüglich Preis und Grösse, sinnvoll einsetzbare Beschleunigungssensoren können für Zwecke der Entfernungsberechnung keinen ausreichend verlässlichen Wert für $\alpha$ liefern, und Kompasse sind insbesondere in Innenräumen von Gebäuden störungsanfällig; allenfalls Winkel in der Vertikalen können mittels Neigungssensoren mit ausreichender Genauigkeit und Verlässlichkeit ermittelt werden.

Im Stand der Technik sind verschiedene Lösungen mit handhaltbaren Entfernungsmessgeräten mit Laserentfernungsmessern beschrieben, mittels derer zwei Punkte gleichzeitig angezielt werden können, wobei ein Winkel zwischen den Emissionsrichtungen der beiden Laser bestimmt werden kann.

In den beiden Dokumenten DE 10 2007 043 496 A1 und JP 2008 116 249 A wird jeweils ein handhaltbares Entfernungsmessgerät offenbart, das zwei gegenüber einander verdrehbare Laserentfernungsmesser umfasst, wobei der Winkel zwischen diesen bestimmbar ist.

In der DE 102 14 742 A1 ist hingegen eine Lösung mit zwei handhaltbaren Entfernungsmessgeräten beschrieben, welche schwenkbar miteinander verbunden werden, wobei die mechanische Verbindung zwischen den beiden Entfernungsmessgeräten Mittel zur Erfassung des Winkels aufweist.

Nachteilig bei allen diesen Lösungen ist insbesondere der erhöhte Materialaufwand, da jeweils zwei Lasermessmodule oder sogar zwei komplette Entfernungsmessgeräte zur Messung vonnöten sind.

Es ist daher eine Aufgabe der vorliegenden Erfindung, ein verbessertes handhaltbares Entfernungsmessgerät bereitzustellen, das eine Bestimmung von Distanzen zwischen entfernten Punkten ermöglicht.

Eine weitere Aufgabe der Erfindung ist es, ein solches Entfernungsmessgerät mit einem geringeren konstruktiven Aufwand bereitzustellen, und insbesondere ohne das Erfordernis, das Entfernungsmessgerät in eine separate Winkelmessvorrichtung einzuspannen.

Es ist ausserdem eine besondere Aufgabe der Erfindung, ein solches handhaltbares Entfernungsmessgerät bereitzustellen, das mit nur einem einzigen Laserentfernungsmesser ausgestattet ist.

Mindestens eine dieser Aufgaben wird durch die Verwirklichung der kennzeichnenden Merkmale der unabhängigen Ansprüche gelöst. Vorteilhafte Ausgestaltungen der Erfindung finden sich dabei in den jeweils abhängigen Ansprüchen.

Das handhaltbare Entfernungsmessgerät der vorliegenden Erfindung ist in der Lage, Raumwinkel zu erfassen, wodurch mittels einfacher trigonometrischer Berechnung die Ermittlung einer genauen Entfernung zwischen zwei nacheinander vermessenen Zielpunkten ermöglicht wird. Dazu weist ein erfindungsgemässes handhaltbares Entfernungsmessgerät eine Bilderfassungseinheit und eine Bildauswerteeinheit auf, mittels welcher Bilder des Messbereiches erfasst und bezüglich eines Raumwinkels ausgewertet werden können.

Das erfindungsgemässe handhaltbare Entfernungsmessgerät enthält ein Distanzmessmodul zur Messung der Entfernung zu auf Oberflächen gelegenen Zielpunkten. Das Distanzmessmodul ist vorzugsweise ein Laserdistanzmesser, der einen, insbesondere sichtbaren, Laserstrahl in Richtung eines zu vermessenden Punktes aussendet. Dazu weist der Laserdistanzmesser eine, beispielsweise in das Gehäuse des Entfernungsmessgerätes eingelassene, Optik auf. Zum optischen Messen der Distanz zu einer Oberfläche werden von der Vorrichtung über die Optik modulierte optische Sendestrahlen in Form eines Strahlenbündels gegen die Oberfläche ausgesendet. Ein Teil der von der Oberfläche reflektierten Strahlen der Sendestrahlen wird von der Optik wieder eingesammelt und für ein Bestimmen von Distanzen elektronisch ausgewertet.

Das erfindungsgemässe handhaltbare Entfernungsmessgerät enthält ausserdem bevorzugt einen Neigungssensor zur Erfassung mindestens einer Längsneigung des Gerätes. Die Bestimmung der Lage des handhaltbaren Entfernungsmessgeräts im Raum kann in Bezug auf das Referenzkoordinatensystem mittels Neigungssensor vollautomatisch ermittelt werden. Alle Lagefehler des handhaltbaren Entfernungsmessgerätes können dadurch vollautomatisch kompensiert werden. Optional können zusätzlich ein Zwei-Achsen-Neigungssensor auf der Horizontalachse, ein Kompass und/oder ein Gyroskop enthalten sein. Eine erste Ausrichtung des Systems kann optional anhand eines Kompasses oder eines GPS-Sensors erfolgen.

Durch die Integration zusätzlicher Komponenten zum Bestimmen von Winkeln ist das erfindungsgemässe Entfernungsmessgerät in der Lage, ausser Distanzen auch horizontale und vertikale Raumwinkel zu messen. Erfindungsgemäss umfassen diese zur Winkelbestimmung geeigneten Komponenten eine Bilderfassungseinheit mit mindestens einer Kamera sowie eine Bildauswerteeinheit.

In einer bevorzugten Ausführungsform weist das erfindungsgemässe handhaltbare Entfernungsmessgerät eine Bilderfassungseinheit mit mindestens zwei, im Speziellen mindestens drei Kameras auf. Das Entfernungsmessgerät kann zusätzlich zu der Kamera oder den Kameras der Bilderfassungseinheit über eine Zielsuch-Kamera mit Zoomfunktionalität verfügen. Ebenso kann eine Kamera der Bilderfassungseinheit optional zusätzlich eine Funktion als Zielsuch-Kamera übernehmen.

Das erfindungsgemässe handhaltbare Entfernungsmessgerät kann Entfernungen zwischen zwei Punkten ermitteln, ohne dass ein Referenzpunkt direkt zugänglich sein muss. Das Entfernungsmessgerät kann so das Spannmass zwischen zwei beliebigen mit dem Laserpunkt anzielbaren Punkten darstellen. Das erfindungsgemässe handhaltbare Entfernungsmessgerät kann ebenso als Winkelmesser und zum Anzeigen von bestimmten, beispielsweise benutzerdefinierten, Winkeln eingesetzt werden.

Erfindungsgemäss ist die Bilderfassungseinheit dazu ausgestaltet, Bilder des Messbereiches um einen gegenwärtig angezielten Punkt aufzunehmen, wobei durch das Entfernungsmessgerät auf dem angezielten Punkt ein sichtbarer bzw. von der Bilderfassungseinheit erfassbarer Punkt erzeugbar ist. Diese Erfassbarkeit durch die Bilderfassungseinheit kann beispielsweise durch die Verwendung eines farbigen Laserstrahles als Messstrahl gewährleistet werden, oder alternativ durch einen - zusätzlich zum den Messstrahl emittierenden Entfernungsmesser am Gerät vorgesehenen - Laserpointer.

Dabei nimmt die Bilderfassungseinheit zur Ausführung des erfindungsgemässen Verfahrens wenigstens zwei Bilder in zeitlichem Zusammenhang mit jeweils einer Entfernungsmessung auf ("Zielbilder"). Unter einer Aufnahme in zeitlichem Zusammenhang mit einer Messung wird hierbei insbesondere eine zeitgleich mit oder unmittelbar vor oder nach einer Messung erfolgende Aufnahme verstanden.

Durch Verknüpfung der beiden - jeweils einen der zwei angezielten Punkte abbildenden - Zielbilder mittels Feature-Extraktion wird ein Panoramabild erzeugt, auf dem beide Punkte abgebildet sind. Dazu werden Merkmale in einem aufgenommenen Bild erfasst und mit Merkmalen eines oder mehrerer weiterer Bilder abgeglichen.

Dazu werden die erfassten Merkmale während eines Schwenkens der Kamera durch Anzielen eines zweiten Punktes mit dem Gerät verfolgt, wobei kontinuierlich oder bedarfsorientiert weitere Bilder erfasst werden. Dazu wird auch Image-Stitching zur Erzeugung des Panoramabildes verwendet.

Insbesondere wenn sich die beiden Zielbilder nicht oder nur geringfügig überlappen, so dass eine Feature-Extraktion nicht oder nicht fehlerfrei ausführbar ist, können weitere Bilder aufgenommen und zur Erzeugung des Panoramabildes herangezogen werden.

Jede Strecke, bzw. jeder Pixel oder Bildpunkt, des Panoramabildes entspricht dabei einem bekannten, von der Winkelauflösung der jeweiligen Kameraoptik abhängigen, Winkelsegment. Aus der Länge einer Strecke oder einer Pixelanzahl zwischen den beiden Messpunkten ist somit der Winkel zwischen den beiden Ausrichtungen des handhaltbaren Entfernungsmessgerätes beim Messen zu den zwei Punkten errechenbar.

Die den Winkel definierende Winkelverzerrung der Kamera ist insbesondere kalibrierbar. Um den bekannten Wert der Winkelverzerrung nicht zu verfälschen, ist beim Erfassen eines zur indirekten Messung verwendeten Bildes der Verzicht auf eine Zoomfunktionalität sinnvoll. Die Kamera - bzw. die Kameras - der Bilderfassungseinheit können daher bevorzugt als Fixfokus-Kameras ausgeführt sein. Alternativ kann eine Kamera mit Zoomfunktionalität derart ausgestaltet sein, dass sie sich zum Erfassen eines zur indirekten Messung verwendeten Bildes vollautomatisch auf einen vom System definierten Zoomgrad mit bekannter Winkelverzerrung einstellt. Ebenso kann bei einer Messung der jeweilige Zoomgrad erfasst und zur Berechnung des Winkelsegments, dem ein Pixel entspricht, herangezogen werden.

Mit einem im Entfernungsmessgerät integrierten Neigungssensor können auch indirekt gemessene Horizontaldistanzen und Höhenunterschiede berechnet werden.

In einer ersten Ausführungsform weist die Bilderfassungseinheit genau eine Kamera auf, die vorzugsweise als Fixfokus-Kamera ausgebildet ist und dazu, während eines aus zwei Entfernungsmessungen bestehenden Messvorganges eine Mehrzahl an Bildern aufzunehmen, die von der Bildauswerteeinheit zu einem Panoramabild zusammengefügt werden. Da die Bilder während einer Bewegung zwischen der ersten und der zweiten Entfernungsmessung aufgenommen werden, weist die Kamera eine lichtstarke Optik mit kurzer Belichtungszeit und/oder einen Global Shutter als Blendenverschluss auf, um Verschmiereffekte zu minimieren.

Alternativ kann der Benutzer zur Bildaufnahme die Bewegung anhalten. Das Gerät kann dann dem Benutzer ein entsprechendes Signal geben, wenn die Bewegung für eine weitere Bildaufnahme angehalten werden soll. Ein solches Signal kann beispielsweise optisch, akustisch und/oder durch Vibration erfolgen. Bei schlechten Lichtverhältnissen oder wenn - wie beispielsweise auf einer ebenen weissen Wand - nicht genügend Strukturen und Merkmale verfügbar sind, um die Bilder eindeutig zusammenzufügen, können Hilfsmittel, wie beispielsweise ein Gyroskop, zur Unterstützung der Bildauswerteeinheit eingesetzt werden.

In einer zweiten Ausführungsform weist die Bilderfassungseinheit mehrere Kameras auf. Vorzugsweise sind diese so auf dem Entfernungsmessgerät angeordnet, dass sie bei der ersten Distanzmessung gleichzeitig ein Weitwinkelbild des gewünschten Arbeitsbereiches aufnehmen können, insbesondere in einem Winkel zwischen 50° und 150°. Ein typischer Arbeitsbereich weist beispielsweise einen Winkel von 120° auf. Befindet sich der bei der zweiten Distanzmessung angezielte Punkt im bei der ersten Messung aufgenommenen Weitwinkelbild, genügt bei der zweiten Messung eine Aufnahme eines einzigen den Zielpunkt umfassenden Bildes. Befindet sich der bei der zweiten Distanzmessung angezielte Punkt ausserhalb des bei der ersten Messung aufgenommenen Weitwinkelbildes, so wird auch als zweites Bild ein Weitwinkelbild aufgenommen. Das zweite Bild wird dann mit dem Weitwinkelbild der ersten Messung zu einem Panoramabild zusammengefügt. Damit sind beide Messpunkte in diesem Panoramabild sichtbar, und somit der Winkel berechenbar.

Vorteile einer Ausführungsform der Bilderfassungseinheit mit mehreren Kameras sind insbesondere eine verbesserte Genauigkeit bei der statischen gleichzeitigen Aufnahme eines Weitwinkelbildes durch mehrere Kameras, ein geringerer Rechenaufwand durch weniger Bildzusammenführungen und geringere Anforderungen an den Aufnahmebereich hinsichtlich erkennbarer Strukturen und Merkmale. Da die Struktur des Bildes zwischen den zwei Messpunkten keine Rolle spielt, funktioniert das Verfahren auch mit einer weissen Wand ohne erkennbare Merkmale. Lediglich im Zielbereich des zweiten Messpunktes muss zum Verknüpfen des Weitwinkelbildes mit dem zweiten Zielbild eine Struktur erfassbar sein.

Bei schlechten Lichtverhältnissen während des Messvorganges kann zur Erhöhung der Genauigkeit ein Stativ für das Entfernungsmessgerät verwendet werden oder auch die Integrationszeit erhöht werden. Mit externen Hilfsmitteln, wie beispielsweise einem Hilfslaserpointer, der auf einen Bereich in der Nähe des zweiten Zielpunktes gerichtet wird und dort mindestens zwei erfassbare Punkte erzeugt, ist es sogar möglich, Messungen bei Dunkelheit durchzuführen.

Vorzugsweise kann das erzeugte Panoramabild zur Extrapolation der Messung verwendet werden. Dadurch muss beispielsweise zum Messen der Breite einer Hauswand nicht mehr exakt an den Rändern dieser Hauswand gemessen werden, was mit einem handgehaltenen Gerät schwierig sein kann. Stattdessen kann nach der Messung von zwei Punkten nahe den Rändern im - dem Benutzer beispielsweise auf einem Touchscreen des Gerätes angezeigten - Panoramabild ein Fadenkreuz auf den Messpunkten eingeblendet werden, das durch den Benutzer genau an den Rand gezogen werden kann, wodurch die indirekt gemessene Distanz entsprechend korrigiert werden kann. Alternativ oder zusätzlich zu den Fadenkreuzen kann die Distanz im Bild als Linie dargestellt werden, die vom Benutzer nach Bedarf verlängert oder verkürzt werden kann. Ebenso kann es dem Benutzer vorzugsweise möglich sein, anhand des Panoramabildes zusätzliche Messungen durchzuführen, sowie die Bilder zu speichern oder zu exportieren und somit für Dokumentationen verwendbar zu machen.

Die Kameras der Bilderfassungseinheit sind vorzugsweise als Wafer Scale Cameras mit Fixfokus ausgebildet, wie sie üblicherweise schon in anderen handhaltbaren Geräten wie z. B. Mobiltelefonen eingesetzt werden. Wafer Scale Cameras sind aufgrund ihrer Kompaktheit gut für den Einsatz in kleinen handhaltbaren Geräten geeignet. Zusätzlich kann das Entfernungsmessgerät über eine Zielsuch-Kamera mit einer Zoomfunktionalität verfügen, die zwar einen kleineren Blickwinkel aufweist, aber eine bessere Anzielgenauigkeit zulässt.

Vorzugsweise ist die Bildauswerteeinheit ausserdem dazu ausgelegt, aus den erfassten und zueinander in Beziehung gesetzten Bildern mittels Bildverarbeitung einen Versatz zwischen den jeweiligen Aufnahmeachsen zu ermitteln. So kann eine Bewegung des Entfernungsmessgerätes zwischen den Aufnahmen der Zielbilder auch in den drei translatorischen Freiheitsgraden ermittelt werden, wodurch unter anderem die Genauigkeit beim Berechnen des Spannmasses zwischen zwei Messpunkten erhöht wird. Ebenso kann der Laserentfernungsmesser vorzugsweise dazu ausgestaltet sein, zwischen den Messvorgängen - kontinuierlich und/oder bedarfsorientiert - weitere Entfernungen zu erfassen, die in die Berechnung zur Ermittlung des Versatzes einbeziehbar sind.

Des Weiteren kann das erfindungsgemässe handhaltbare Entfernungsmessgerät vorzugsweise vorgegebene Koordinaten relativ zum ersten Messpunkt abstecken und dem Benutzer signalisieren. Ebenso kann mittels eines optional integrierten Neigungssensors von jedem beliebigen Punkt die Lotposition angezeigt werden. Flächen von im Raum liegenden geometrischen Formen, die durch mindestens drei Messpunkte definiert werden, können automatisch berechnet werden. In ein aufgenommenes Mess-Image können vorzugsweise automatisch geometrische Formen eingepasst, und deren Abmasse ermittelt werden. Mit dem aufgenommen Mess-Image können die Messpunkte an die gewünschte Position geschoben werden, wobei die Messkoordinaten automatisch extrapoliert werden.

Das erfindungsgemässe handhaltbare Entfernungsmessgerät und das erfindungsgemässe Messverfahren werden nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen:

Fig. 1a-b ein erfindungsgemässes handhaltbares Entfernungsmessgerät mit einem Laserdistanzmesser;

Fig. 2 die trigonometrischen Grundlagen zur Errechnung der Entfernung zwischen zwei entfernten Zielpunkten;

Fig. 3 ein erfindungsgemässes handhaltbares Entfernungsmessgerät und die drei Drehachsen des Referenzkoordinatensystems;

Fig. 4 ein erfindungsgemässes handhaltbares Entfernungsmessgerät in einer Längsschnittansicht;

Fig. 5a-c ein erfindungsgemässes handhaltbares Entfernungsmessgerät in drei beispielhaften Ausgestaltungen mit unterschiedlich angeordneten Kameras;

Fig. 6a ein erfindungsgemässes handhaltbares Entfernungsmessgerät beim Messen der Entfernung zu einem ersten Messpunkt;

Fig. 6b ein erfindungsgemässes handhaltbares Entfernungsmessgerät beim Messen der Entfernung zu einem zweiten Messpunkt;

Fig. 7a-b das Zusammenfügen der Zielbilder und weiterer erfasster Bilder;

Fig. 8 das Zusammenfügen eines als Weitwinkelbild aufgenommenen ersten Zielbildes mit einem zweiten Zielbild;

Fig. 9 das Bestimmen eines Winkels anhand von Bildinformationen; und

Fig. 10 ein Flussdiagramm zur Darstellung eines erfindungsgemässen Verfahrens zur Vermessung der Entfernung zwischen zwei entfernten Zielpunkten.

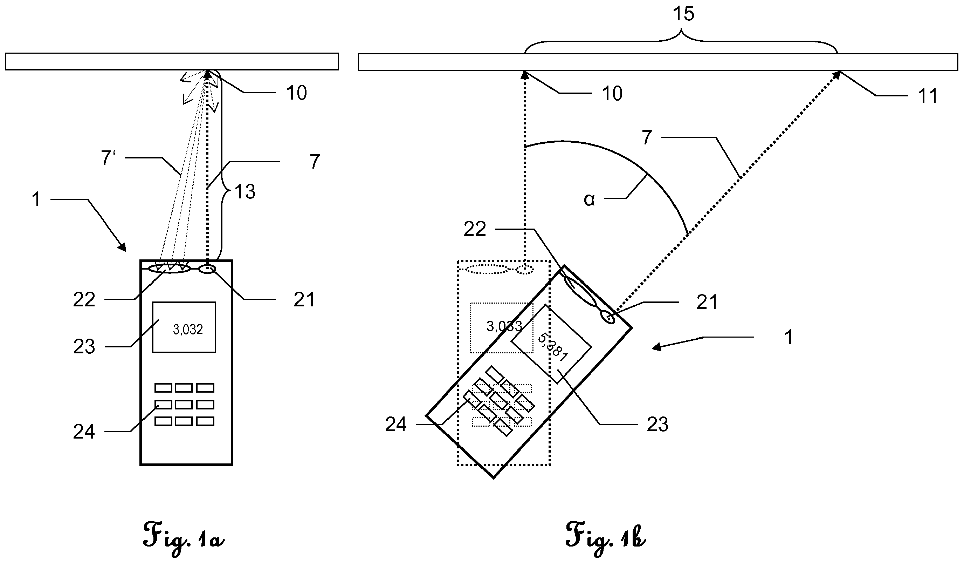

In Figur 1a ist ein gattungsgemässes handhaltbares Entfernungsmessgerät 1 zum Vermessen von Entfernungen in Aussenansicht dargestellt. Es weist ein Gehäuse auf, in dem die notwendigen elektronischen Komponenten angeordnet sind.

Das Gehäuse ist dabei so ausgebildet, dass das Entfernungsmessgerät 1 in der Hand gehalten und auch an einem zu vermessenden Punkt definiert angelegt oder angeschlagen werden kann. Am Gehäuse können zu diesem Zweck entsprechende Anlagekanten oder ausklappbare oder aufsteckbare Anschlagelemente angebracht sein, wie sie beispielsweise in der WO 02/50564 beschrieben werden. Das Entfernungsmessgerät 1 beinhaltet an seiner Vorderseite einen Laserentfernungsmesser 20 mit einer Laseraussendeeinheit 21 und einer Laserempfangseinheit 22, die über optische Öffnungen im Gehäuse verfügen. Auf der Oberseite des Geräts befinden sich eine Anzeigevorrichtung 23 in Form eines Displays und Eingabemittel 24 in Form eines Tastenfeldes. Ausserdem kann eine - hier nicht dargestellte - Zielsuch-Kamera mit einer Zoomfunktionalität zur Aufnahme von auf der Anzeigevorrichtung 23 anzeigbaren Bildern in Richtung der Emissionsrichtung vorgesehen sein.

Erfindungsgemäss sendet die Laseraussendeeinheit 21 einen Laserstrahl 7 zu einem Messpunkt 10 auf einer Wand aus. Die Wand weist eine natürlich rauhe Oberfläche auf, von der optische Strahlen streuend reflektiert werden. Ein Teil der gestreut reflektierten Strahlen 7' des Laserstrahls 7 wird von der Laserempfangseinheit 22 eingesammelt, detektiert und in ein elektrisches Signal umgewandelt. Das Signal wird in an sich bekannter Weise zum Bestimmen des digitalen Werts der Distanz 13 von einer elektronischen Schaltung ausgewertet. Zur Entfernungsermittlung kann z. B. Phasen- oder Laufzeitmessung eingesetzt werden. Dabei wird auch die Erstreckung zwischen der Laserempfangseinheit 22 und einem Messanschlag berücksichtigt. Der durch die Auswertung digital bestimmte Wert der gemessenen Entfernung 13 wird dann durch die Anzeigevorrichtung 23 einem Benutzer zur Verfügung gestellt.

In Figur 1b ist das handhaltbare Entfernungsmessgerät 1 aus Figur 1a beim Messen einer Entfernung zu einem ersten Punkt 10 und zu einem zweiten Punkt 11 an einer Wand gezeigt. Für die Messung zum zweiten Punkt 11 wird die Lage des Entfernungsmessgerätes 1 gegenüber der Messung zum ersten Punkt 10 durch den Benutzer geändert, hier dargestellt als eine Drehung um den Winkel α. Ist dieser Winkel α zusätzlich zu den Entfernungen zu den beiden Punkten 10,11 erfassbar, kann die Strecke 15 zwischen den beiden Punkten 10,11 berechnet werden.

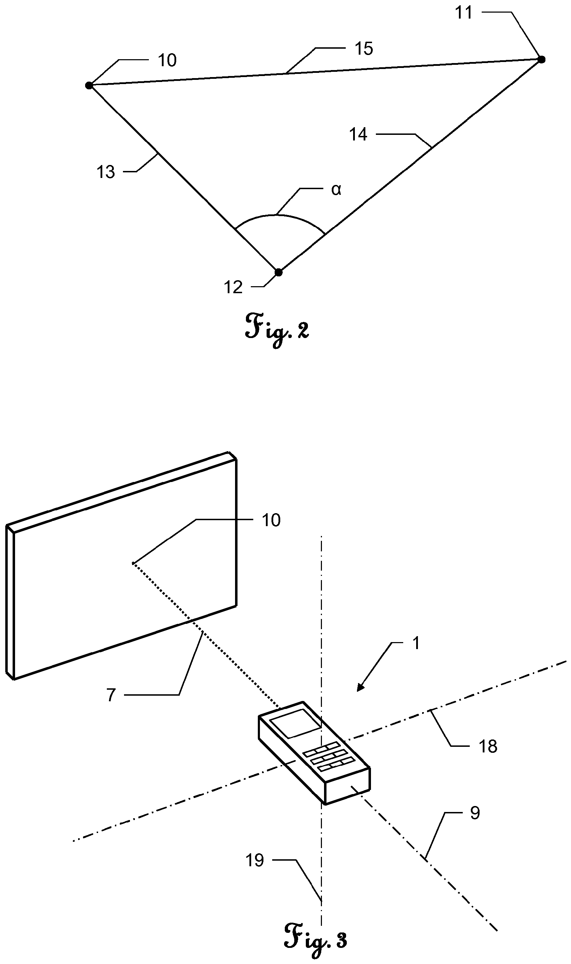

Figur 2 zeigt die trigonometrischen Grundlagen des erfindungsgemässen Verfahrens. Die Länge einer Strecke 15 kann mittels der bekannten Entfernungen 13,14 von einem beliebigen Raumpunkt zu den Endpunkten 10,11 der Strecke 15 und dem Winkel α zwischen den Richtungen vom Raumpunkt 12 zu den Endpunkten 10,11 berechnet werden. Dazu kann insbesondere der Kosinussatz verwendet werden.

Figur 3 zeigt das erfindungsgemässe handhaltbare Entfernungsmessgerät 1, das einen Laserstrahl 7 in einer ersten Emissionsrichtung 8 zu einem Messpunkt 10 aussendet. Dargestellt sind auch die orthogonal zur Emissionsrichtung 8 verlaufenden Drehachsen: die Querachse 18 und die Stehachse 19.

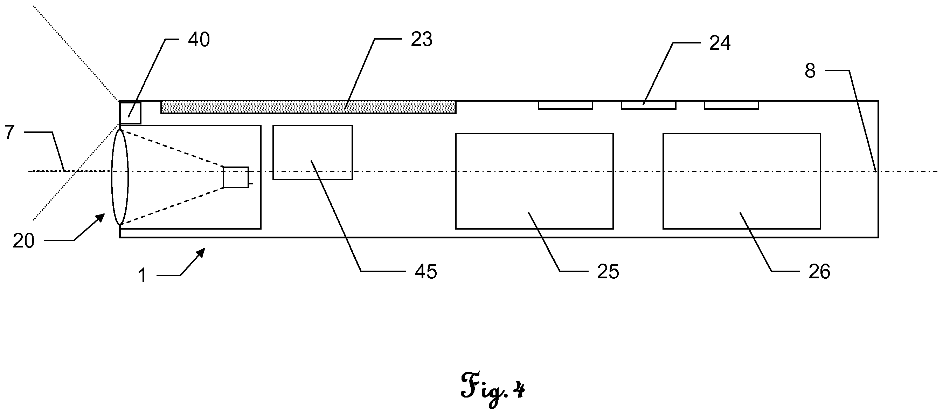

Figur 4 stellt einen Längsschnitt durch ein erfindungsgemässes handhaltbares Entfernungsmessgerät 1 dar. Das Entfernungsmessgerät 1 beinhaltet einen Laserentfernungsmesser 20 mit einem in Emissionsrichtung 8 ausgesendeten Laserstrahl 7. Des Weiteren sind ein Display 23 und Eingabemittel 24 dargestellt. Als interne Komponenten werden eine Bildauswerteeinheit 45, eine Auswertekomponente 25 und ein Inertialsensor 26 gezeigt. Ausserdem ist im Entfernungsmessgerät 1 eine (nicht dargestellte) Energiequelle enthalten, insbesondere eine Batterie oder ein Akku, die elektrische Energie für die elektrisch betriebenen Komponenten des Entfernungsmessgeräts 1 bereitstellt.

Ein digital vorliegender Entfernungswert kann - wie bei optisch gemessenen Distanzen heute üblich - von der Auswertekomponente 25 des Gerätes gespeichert, weiterverarbeitet oder übertragen und auf dem Display 23 einem Benutzer angezeigt werden.

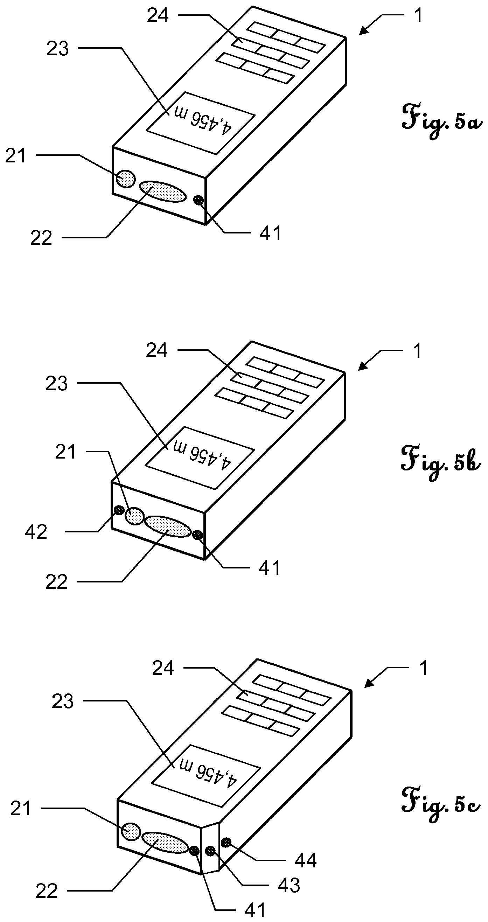

In den Figuren 5a bis 5c wird das erfindungsgemässe handhaltbare Entfernungsmessgerät 1 mit drei beispielhaften Ausgestaltungen der Bilderfassungseinheit dargestellt.

Figur 5a zeigt ein handhaltbares Entfernungsmessgerät 1 mit einer einzelnen, neben der Laseraussendeeinheit 21 und der Laserempfangseinheit 22 angeordneten, Kamera 41.

Figur 5b zeigt ein handhaltbares Entfernungsmessgerät 1 mit einer auf der einen Seite der Laseraussendeeinheit 21 und der Laserempfangseinheit 22 angeordneten ersten Kamera 41 und einer auf der anderen Seite angeordneten zweiten Kamera 42.

Figur 5c zeigt ein handhaltbares Entfernungsmessgerät 1 mit drei auf derselben Seite des Laserentfernungsmessers angeordneten Kameras 41,43,44.

Die Kameras 41-44 der in den Figuren 5a und 5b gezeigten Bilderfassungseinheiten sind insbesondere derart ausgestaltet, dass sie durch gleichzeitige Aufnahme eines Bildes ein Weitwinkelbild erzeugbar machen. Es sind diverse weitere, hier aus Platzgründen nicht darstellbare, Kameraanordnungen ausführbar, insbesondere können auf beiden Seiten des Laserentfernungsmessers 20 jeweils mehrere Kameras angeordnet sein, oder es können Kameras ober- und/oder unterhalb des Laserentfernungsmessers 20 angeordnet sein.

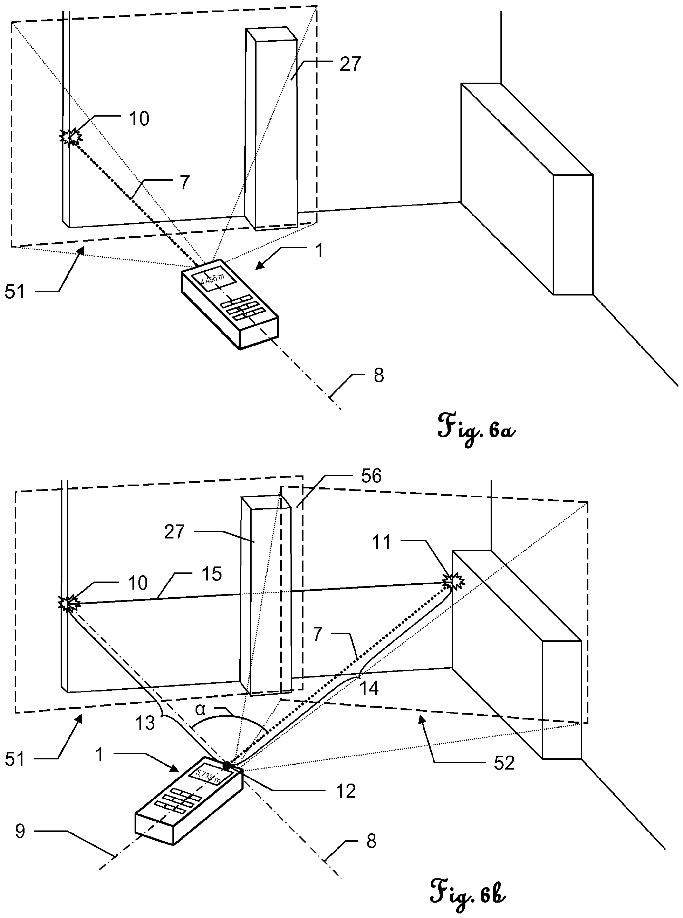

In den Figuren 6a und 6b wird ein Verfahren illustriert, mittels dessen mit einem erfindungsgemässen Entfernungsmessgerät 1 die Länge einer Strecke 15 zwischen zwei entfernten Messpunkten 10,11 auf einer Oberfläche ermittelt werden kann, zum Beispiel wenn - wie hier dargestellt - ein Hindernis 27 eine direkte Messung von einem ersten Punkt 10 zu einem zweiten Punkt 11 verhindert.

In Figur 6a ist ein erfindungsgemässes handhaltbares Entfernungsmessgerät 1 beim Messen der Entfernung zu dem ersten Messpunkt 10 dargestellt. Der Benutzer richtet das Messgerät 1 mittels des sichtbaren Laserstrahles 7 auf den zu vermessenden Punkt 10 an der Wand aus und startet den Messvorgang über Eingabemittel des Gerätes 1. Der Laserentfernungsmesser 20 erfasst die Entfernung 13 zum Punkt 10; diese wird von einer Auswerteeinheit des Gerätes 1 gespeichert. Gleichzeitig nimmt eine Kamera der Bilderfassungseinheit 40 ein erstes Zielbild 51 von der Messumgebung auf. Dieses wird von der Bildauswerteeinheit gespeichert.

In Figur 6b ist das handhaltbare Entfernungsmessgerät 1 beim Messen zu dem zweiten Messpunkt 11 dargestellt. Der Benutzer richtet das Gerät 1 mittels des sichtbaren Laserstrahles 7 auf einen weiteren zu vermessenden Punkt 11 an der Wand aus und startet den zweiten Messvorgang. Der Laserentfernungsmesser 20 erfasst die Entfernung 14 zum zweiten Punkt 11, die von der Auswerteeinheit gespeichert wird. Gleichzeitig nimmt eine Kamera der Bilderfassungseinheit 40 ein zweites Zielbild 52 von der Messumgebung auf, wobei das erste und das zweite Zielbild einen sich überschneidenden gemeinsamen Bildbereich aufweisen 56.

Dieser gemeinsame Bildbereich 56 wird von der Bildauswerteeinheit dazu verwendet, das erste Zielbild 51 und das zweite Zielbild 52 durch Feature-Extraktion zueinander in Beziehung zu setzen, insbesondere mittels Image-Stitching miteinander zu einem Panoramabild zu verknüpfen. Dazu muss der gemeinsame Bildbereich 56 erfassbare Strukturen oder sonstige Merkmale aufweisen. In diesem Beispiel sind Teile des Hindernisses 27 als erfassbares Merkmal vorhanden.

Die Zielbilder 51,52 sind aus Bildpunkten, insbesondere Pixeln zusammengesetzt. Je nach Optik der Kamera steht jeder Pixel für ein Winkelsegment. Durch Kenntnis der Kameraoptik des Gerätes ist auch die Grösse dieses Winkelsegmentes bekannt und in einem Speicher der Bildauswerteeinheit hinterlegt.

Aus den zueinander in Beziehung gesetzten Bildern, bzw. aus dem zusammengesetzten Panoramabild, kann daher durch Ermitteln der Anzahl an Pixeln zwischen den beiden Messpunkten 10,11 der Winkel $\alpha$ zwischen der ersten Emissionsrichtung 8 und der zweiten Emissionsrichtung 9 errechnet werden. Mittels Triangulation, insbesondere des Kosinussatzes, kann nun aus den gemessenen Entfernungen 13,14 und dem Winkel $\alpha$ die Distanz 15 zwischen den beiden Punkten 10,11 errechnet werden.

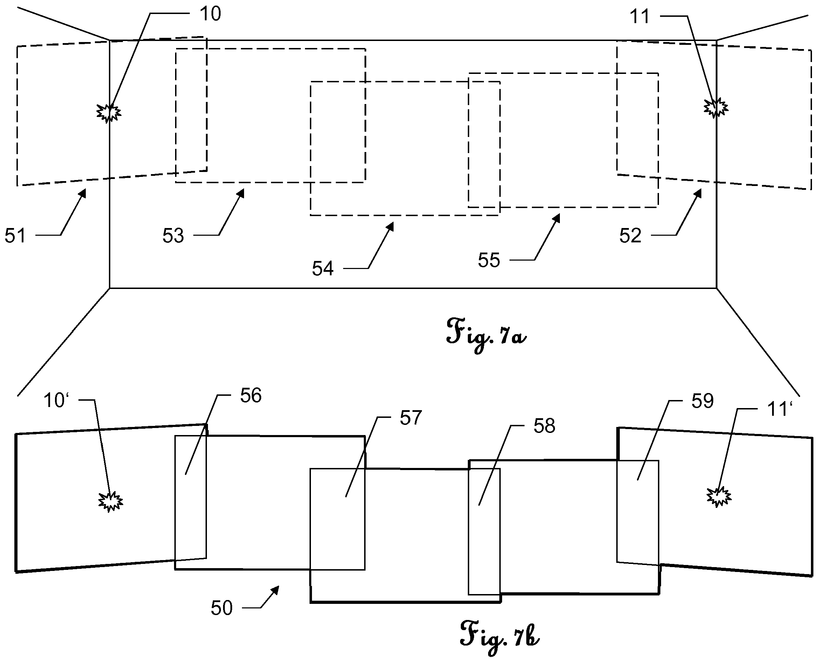

In den Figuren 7a und 7b ist das Zusammenfügen mehrerer Bilder 51-55 zu einem Panoramabild 50 dargestellt. Für dieses Verfahren ist nur eine einzige Kamera nötig.

In Figur 7a ist eine Messumgebung in einem Raum mit zwei vermessenen Zielpunkten 10,11 dargestellt. Während des ersten und des zweiten Messvorganges werden ein erstes Zielbild 51 und ein zweites Zielbild 52 erfasst, die sich in diesem Beispiel nicht überschneiden. Zwischen den beiden Messvorgängen werden darum zur Überbrückung der Distanz zwischen den beiden Zielbildern 51,52 drei weitere Bilder 53-55 erfasst. Jedes der erfassten Ziel- und weiteren Bilder 51-55 hat dabei mindestens einen mit den jeweils angrenzenden Bildern gemeinsamen Bildbereich, und diese Überschneidungen sind so verteilt, dass durch die Bilder 51-55 eine durchgehend abgebildete Verbindung zwischen den beiden Zielpunkten 10,11 besteht.

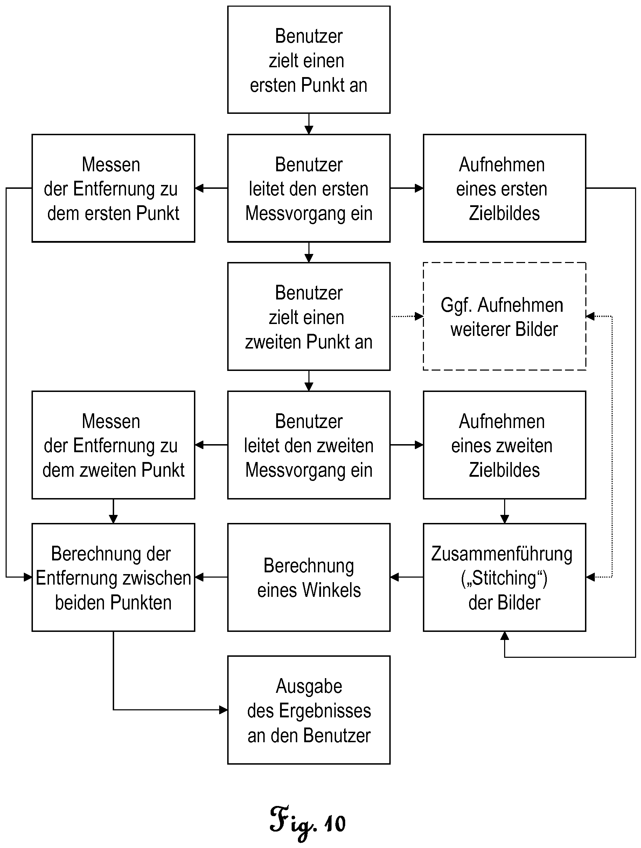

In Figur 7b ist das Zusammenfügen der einzelnen Bilder aus Figur 7a zu einem einzigen Panoramabild 50 mittels Image-Stitching dargestellt. Dies wird durch Erkennen und Verknüpfen von Merkmalen in den gemeinsamen Bildbereichen 56-59 der Einzelbilder mittels Bildverarbeitung ermöglicht. Durch dieses Zusammenfügen der Einzelbilder werden die Abbildungen 10',11' der beiden Zielpunkte in demselben Panoramabild 50 zusammengebracht.

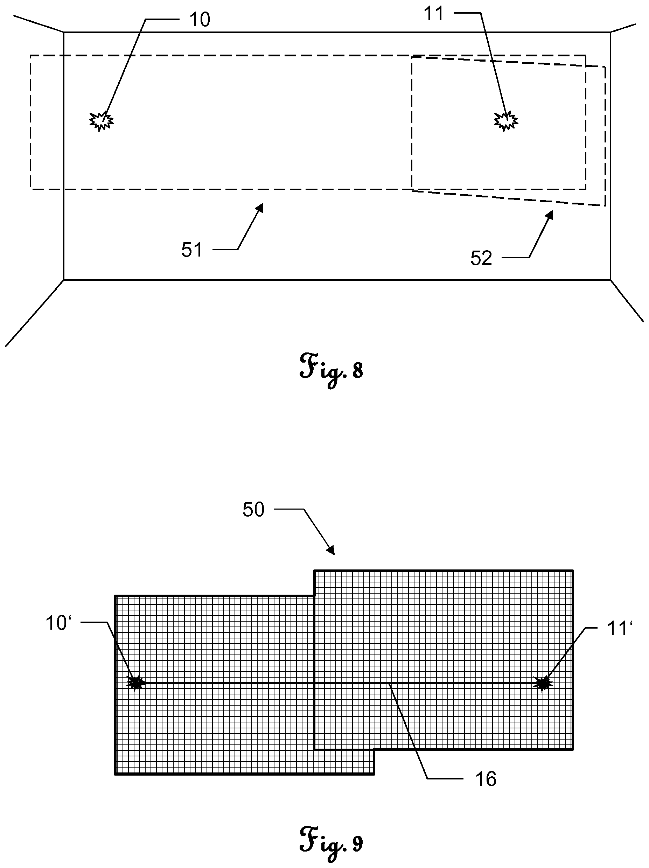

Figur 8 stellt das Zusammenfügen eines Weitwinkelbildes als erstem Zielbild 51 mit einem zweiten Zielbild 52 dar. Zur Aufnahme eines Weitwinkelbildes verfügt das handgehaltene Entfernungsmessgerät vorzugsweise über mehrere Kameras, die gleichzeitig ein Bild aufnehmen, dass zusammengenommen insbesondere einen Winkelbereich von mindestens 120° umfassen kann. Bei drei Kameras mit einem Winkelbereich von 50° kann beispielsweise ein Winkelbereich von bis zu 150° gleichzeitig erfasst werden. Während des ersten Messvorganges zum ersten Zielpunkt 10 wird ein solches Weitwinkelbild als erstes Zielbild 51 erfasst. Da in diesem Beispiel ausser dem ersten Zielpunkt 10 auch der anschliessend zu messende zweite Zielpunkt 11 im Bildbereich des Weitwinkelbildes liegt, genügt das Erfassen eines einzelnen Bildes als zweitem Zielbild 52. Die beiden Zielbilder 51,52 weisen dadurch automatisch einen gemeinsamen Bildbereich auf und sind miteinander mittels Image-Stitching zu einem Panoramabild (wie in Figur 7b gezeigt) verknüpfbar.

Figur 9 zeigt ein aus zwei Zielbildern zusammengefügtes Panoramabild 50 mit einer Abbildung 10' des ersten Zielpunktes 10 und einer Abbildung 11' des zweiten Zielpunktes 11. Zur Ableitung des Winkels $\alpha$ zwischen den beiden Emissionsrichtungen bei den Messungen zu diesen Raumpunkten ist es - unter der Voraussetzung, dass die Winkelverzerrung der Kameraoptik bekannt ist - möglich, ein Abstand 16 zwischen den Repräsentationen 10',11' der beiden Zielpunkte in dem Panoramabild 50 heranzuziehen. Dieser Abstand 16 in der Abbildung kann insbesondere durch Zählen der Pixel zwischen den beiden Repräsentationen 10',11' ermittelt werden, wobei jeder Pixel des Panoramabildes 50 einem bekannten, von der jeweiligen Optik abhängigen, Winkelsegment entspricht. Aus dem Abstand 16 bzw. der Pixelanzahl zwischen den beiden Repräsentationen 10',11' der Zielpunkte im Panoramabild 50 ist somit der Winkel $\alpha$ und damit auch die reale Entfernung zwischen den beiden Zielpunkten errechenbar. Ist für die bekannte Winkelverzerrung der Optik ein Wert in einer Auswertekomponente des Entfernungsmessgerätes hinterlegt, kann die Berechnung des Winkels $\alpha$ vollautomatisch erfolgen.

Figur 10 zeigt ein Flussdiagramm, durch das einzelne, nach Verfahrensstart ablaufende, Schritte eines beispielhaften erfindungsgemässen Messverfahrens mit einem in den vorangehenden Figuren gezeigten Entfernungsmessgerät 1 illustriert werden. Zum Starten des Verfahrens zielt der Benutzer zunächst mit dem Laserstrahl 7 des Entfernungsmessgerätes 1 auf den ersten Messpunkt 10 und leitet über die Eingabemittel 24 des Gerätes den Messvorgang ein. Die Auswerteeinheit 25 ermittelt und speichert die vom Laserentfernungsmesser 20 ermittelten Werte für die Entfernung 13 - sowie eventuell die von einem Inertialsensor 26 ermittelten Werte für die Neigung des Entfernungsmessgerätes 1. Die Bilderfassungseinheit 40 nimmt, insbesondere zeitgleich zur Entfernungsmessung, ein erstes Zielbild 51 auf, auf dem der erste Messpunkt 10 erfassbar ist. Eine Bildauswerteinheit 45 speichert das von der Bilderfassungseinheit 40 aufgenommene Zielbild 51.

Der Benutzer zielt anschliessend den zweiten Messpunkt 11 an und schwenkt dazu das Entfernungsmessgerät 1. Während des Anzielens nimmt die Bilderfassungseinheit 40 gegebenenfalls weitere Bilder 53-55 auf, um durch das Erzeugen mehreren Bildern gemeinsamer Bildbereiche 56-59 eine spätere Zusammenfügbarkeit der Zielbilder 51,52 zu gewährleisten. Insbesondere ist die Bilderfassungseinheit 40 dabei derart ausgebildet, vollautomatisch zu erkennen, ob für das spätere Zusammenfügen der Zielbilder 51,52 ein weiteres Bild 53-55 erfasst werden muss, und dieses vollautomatisch zu erfassen.

Mit dem erneuten Auslösen eines Messvorganges zu dem zweiten Messpunkt 11 durch den Benutzer wird von der Auswerteeinheit 25 eine weitere Entfernung 14 - und eventuell auch eine Neigung - ermittelt und gespeichert. Insbesondere gleichzeitig mit der Messung wird von der Bilderfassungseinheit 40 ein zweites Zielbild 52 aufgenommen.

Die Bildauswerteinheit 45 fügt die Zielbilder 51,52 und eventuell weitere Bilder 53-55 mittels Image-Stitching zu einem Panoramabild 50 zusammen. Dazu ist sie in der Lage, mittels Bilderkennung Strukturen oder Merkmale in den gemeinsamen Bildbereichen 56-59 der Bilder 51-55 zu erkennen.

Sind für ein Image-Stitching nicht genügend Bilder mit ausreichenden gemeinsamen Bildbereichen 56-59 aufgenommen worden, so kann der Benutzer nach dem zweiten Messvorgang auch dazu aufgefordert werden, das Entfernungsmessgerät 1 für weitere Aufnahmen durch die Bilderfassungseinheit 40 neu auszurichten, und beispielsweise durch das Display 23 des Gerätes zu einer oder mehreren bestimmten Ausrichtungen geleitet werden, in welcher zur Ermöglichung des Image-Stitchings ein oder mehrere weitere Bilder 53-55 aufgenommen werden müssen.

Sind die Bilder 51-55 durch die Bildauswerteeinheit 45 zusammengefügt worden, kann diese aus dem Abstand 16 zwischen den beiden Abbildungen 10',11' der Messpunkte 10,11 - insbesondere bestimmt durch die Anzahl der Pixel - und einem bekannten, von der Optik der Kameras 41-44 der Bilderfassungseinheit 40 abhängigen, Winkelbereich der einzelnen Pixel einen Winkel $\alpha$ errechnen. Dies ist der Winkel zwischen den beiden Emissionsrichtungen 8,9 bei den beiden Entfernungsmessungen zu den Messpunkten 10,11. Mittels des Kosinussatzes kann die Auswerteeinheit 25 aus den beiden gemessenen Entfernungen 13,14 und dem berechneten Winkel $\alpha$ die Distanz 15 zwischen den beiden Messpunkten 10,11 berechnen. Das Ergebnis kann dann über das Display 23 an den Benutzer ausgegeben werden.

Es versteht sich, dass diese dargestellten Figuren nur mögliche Ausführungsbeispiele schematisch darstellen. Die verschiedenen Ansätze können ebenso miteinander wie mit Verfahren und Geräten des Stands der Technik kombiniert werden.

**Patentansprüche**

1.  Verfahren zum Ermitteln einer Distanz (15) zwischen zwei Zielpunkten (10, 11) mit einer Messsequenz mit

    • einem Messen einer ersten Entfernung (13) zu einem ersten Zielpunkt (10) durch Aussenden eines Laserstrahls (7) in einer ersten Emissionsrichtung (8), und
    • einem Messen einer zweiten Entfernung (14) zu einem zweiten Zielpunkt (11) durch Aussenden eines Laserstrahls (7) in einer zweiten Emissionsrichtung (9),
    und mit einem Erfassen einer Serie von Bildern (51-55) mittels einer einen Global Shutter als Blendenverschluss aufweisenden Kamera mit bekannter Kameraoptik, wobei die Serie von Bildern (51-55) mindestens ein erstes Zielbild (51) und ein zweites Zielbild (52) sowie während einer Bewegung der Kamera zwischen der ersten und der zweiten Entfernungsmessung aufgenommene weitere Bilder (53-55) aufweist, wobei
    • das erste Zielbild (51) mit einer Abbildung (10') des ersten Zielpunktes (10) zeitgleich mit dem Messen der ersten Entfernung (13) erfasst wird, und
    • das zweite Zielbild (52) mit einer Abbildung (11') des zweiten Zielpunktes (11) zeitgleich mit dem Messen der zweiten Entfernung (14) erfasst wird,
    **dadurch gekennzeichnet, dass**
    die Bilder (51-55) der Serie mindestens einen gemeinsamen Bildbereich (56-59) aufweisen, und das Verfahren aufweist
    • ein ein Zusammenfügen der erfassten Bilder (51-55) zu einem Panoramabild (50) beinhaltendes Setzen der erfassten Bilder (51-55) in Beziehung zueinander mittels des mindestens einen gemeinsamen Bildbereiches (56-59) und mittels Feature-Extraktion und Image-Stitching, wobei erkannte Merkmale während eines durch Anzielen des zweiten Zielpunktes ausgeführten Schwenkens der Kamera verfolgt werden, wofür kontinuierlich oder bedarfsorientiert weitere Bilder erfasst werden,
    • ein Bestimmen eines Abstands (16) zwischen den Abbildungen (10', 11') der Zielpunkte (10, 11) in den zueinander in Beziehung gesetzten Bildern (51-55) anhand einer Zahl von Bildpunkten zwischen den Abbildungen (10', 11') der Zielpunkte (10, 11), wobei - unter Heranziehung der Kenntnis der Kameraoptik - aus dem Abstand (16) zwischen den Abbildungen (10', 11') ein Raumwinkel (a) zwischen der ersten Emissionsrichtung (8) und der zweiten Emissionsrichtung (9) bestimmt wird, und

• ein Ermitteln der Distanz (15) zwischen den Zielpunkten (10, 11), wobei die Distanz (15) mittels des Kosinussatzes und mittels der gemessenen Entfernungen (13, 14) zu den Zielpunkten (10, 11) und des Raumwinkels (a) zwischen der ersten Emissionsrichtung (8) und der zweiten Emissionsrichtung (9) errechnet wird.

2. Verfahren nach Anspruch 1,
   **dadurch gekennzeichnet, dass**
   die Zahl von Bildpunkten zwischen den Abbildungen (10', 11') der Zielpunkte (10, 11) eine Zahl von Pixeln ist.

3. Verfahren nach einem der Ansprüche 1 bis 2,
   **dadurch gekennzeichnet, dass**
   das Erfassen des ersten Zielbildes (51) im wesentlichen in Richtung der ersten Emissionsrichtung (8) und das Erfassen des zweiten Zielbildes (52) im wesentlichen in Richtung der zweiten Emissionsrichtung (9) erfolgt.

4. Verfahren nach Anspruch 3,
   **dadurch gekennzeichnet, dass**

   • anhand der Koordinaten eines Zielpunktes (10) eine horizontale Ebene (17) definiert wird, und eine Entfernung eines zweiten Zielpunktes (11) zu dieser Ebene (17) ermittelt wird, und/oder
   • anhand der Koordinaten mindestens zweier Zielpunkte (10, 11) ein Verlauf einer Geraden durch zwei Zielpunkte (10, 11) ermittelt wird, und eine Entfernung eines dritten Zielpunktes oder einer Parallelen, die durch einen dritten Zielpunkt definiert wird, zu dieser Geraden ermittelt wird.

5. Handhaltbares Entfernungsmessgerät (1) mit

   • einem Laserentfernungsmesser (20) zur Messung von Entfernungen (13, 14) zu Zielpunkten (10, 11) mittels eines in einer Emissionsrichtung (8, 9) ausgesendeten Laserstrahls (7),
   • einer Auswertekomponente (25) zur Ableitung und Bereitstellung der gemessenen Entfernungen (13, 14) und
   • einer Bilderfassungseinheit (40) mit mindestens einer einen Global Shutter als Blendenverschluss aufweisenden Kamera (41-44) zur Erfassung einer Serie von Bildern (51-55), wobei eine Kameraoptik der mindestens einen Kamera (41-44) bekannt ist, wobei die Serie von Bildern (51-55) Zielbilder (51, 52) umfasst, die
   • in zeitlichem Zusammenhang, insbesondere zeitgleich, mit einer Messung einer Entfernung (13, 14) zu einem Zielpunkt (10, 11) erfasst werden, sodass sie mit dieser Entfernung (13, 14) verknüpfbar sind, und
   • eine Abbildung (10', 11') des Zielpunkts (10, 11) aufweisen,
   **dadurch kennzeichnet, dass**
   das Entfernungsmessgerät (1) über eine Bilderfassungs- und -auswertefunktionalität verfügt, im Rahmen derer
   • die Bilderfassungseinheit (40) eine Serie von Bildern (51-55) erfasst, die mindestens ein erstes Zielbild (51), das zeitgleich mit einer ersten Messung einer ersten Entfernung (13) zu einem ersten Zielpunkt (10) in einer ersten Emissionsrichtung (8) erfasst wird, und ein zweites Zielbild (52), das zeitgleich mit einer zweiten Messung einer zweiten Entfernung (14) zu einem zweiten Zielpunkt (11) in einer zweiten Emissionsrichtung (9) erfasst wird, sowie während einer Bewegung der Kamera zwischen der ersten und der zweiten Entfernungsmessung aufgenommene weitere Bilder (53-55) aufweist, und in der jedes der Bilder (51-55) einen gemeinsamen Bildbereich (56-59) mit mindestens einem weiteren Bild aufweist,
   • eine Bildauswerteeinheit (45) des Entfernungsmessgerätes (1) durch Auswertung der Bilder (51-55) der Serie mittels Feature-Extraktion und Image-Stitching das erste Zielbild (51) und das zweite Zielbild (52) mittels Verknüpfung zu einem Panoramabild (50) zueinander in Beziehung setzt, wobei erkannte Merkmale während eines durch Anzielen des zweiten Zielpunktes ausgeführten Schwenkens der Kamera verfolgt werden, wofür kontinuierlich oder bedarfsorientiert weitere Bilder erfasst werden,
   • die Bildauswerteeinheit (45) dazu ausgestaltet ist, in den Bildern (51-55) einen Abstand (16) zwischen den Abbildungen (10', 11') des ersten und zweiten Zielpunktes (10, 11) anhand einer Zahl von Bildpunkten zwischen den Abbildungen (10', 11') des ersten und zweiten Zielpunktes (10, 11) zu bestimmen, wobei - unter Heranziehung der Kenntnis der Kameraoptik - aus dem Abstand (16) zwischen den Abbildungen (10', 11') ein Raumwinkel (a) zwischen der ersten Emissionsrichtung (8) und der zweiten Emissionsrichtung (9) bestimmt wird, und
   • die Auswertekomponente (25) zur Errechnung der Distanz (15) mittels des Kosinussatzes und mittels der gemessenen Entfernungen (13, 14) zu den Zielpunkten (10, 11) und des Raumwinkels (a) zwischen der ersten Emissionsrichtung (8) und der zweiten Emissionsrichtung (9) ausgebildet ist.

**6.** Handhaltbares Entfernungsmessgerät (1) nach Anspruch 5,
**dadurch gekennzeichnet, dass**

- das erste Zielbild (51) einen gemeinsamen Bildbereich (56) mit dem zweiten Zielbild (52) aufweist,
- das erste Zielbild (51) und das zweite Zielbild (52) jeweils einen gemeinsamen Bildbereich (56, 59) mit einem weiteren erfassten Bild (53) der Serie aufweisen, und/oder
- das erste Zielbild (51) und das zweite Zielbild (52) jeweils einen gemeinsamen Bildbereich (56, 59) mit einer durch gemeinsame Bildbereiche (57, 58) definierten kontinuierlichen Folge von weiteren erfassten Bildern (53-55) der Serie aufweisen.

**7.** Handhaltbares Entfernungsmessgerät (1) nach Anspruch 5 oder 6,
**dadurch gekennzeichnet, dass**
die Bilderfassungseinheit (40) mindestens zwei, insbesondere drei, Kameras (41-44) aufweist und/oder dazu ausgestaltet ist,

- Bilder (51-55) in Richtung einer Emissionsrichtung (8, 9) zu erfassen,
- Zielbilder (51, 52) als Weitwinkelbilder, insbesondere mit in einem Winkel von mindestens 120°, zu erfassen, und/oder
- mit mehreren Kameras (41-44) gleichzeitig Bilder (51-55) zu erfassen.

**8.** Handhaltbares Entfernungsmessgerät (1) nach einem der Ansprüche 5 bis 7,
**dadurch gekennzeichnet, dass**
die Zahl von Bildpunkten eine Zahl von Pixeln ist.

**9.** Handhaltbares Entfernungsmessgerät (1) nach einem der Ansprüche 5 bis 8,
**gekennzeichnet durch**

- eine Zielsuch-Kamera mit einer Zoomfunktionalität,
- Eingabemittel (24), insbesondere ein Tastenfeld, zum Anwählen von Funktionen und/oder
- ein, insbesondere berührungssensitives, Display (23) zur Anzeige

  ▪ mittels der mindestens einen Kamera (41-44) der Bilderfassungseinheit (40) aufgenommener Bilder (51-55),
  ▪ zusammengefügter Panoramabilder (50),
  ▪ gemessener Entfernungen (13, 14),
  ▪ berechneter Distanzen (15) und Raumwinkel (a) und/oder
  ▪ eines von der Zielsuch-Kamera aufgenommenen Live-Bildes.

**10.** Computerprogrammprodukt mit Programmcode, der auf einem maschinenlesbaren Träger gespeichert ist, zur Ausführung des Verfahrens nach einem der Ansprüche 1 bis 4, wenn das Programm auf einer als Auswertekomponente (25) des Entfernungsmessgeräts (1) nach einem der Ansprüche 5 bis 9 ausgebildeten elektronischen Datenverarbeitungseinheit ausgeführt wird.

**Claims**

**1.** Method for determining a distance (15) between two target points (10, 11) with a measurement sequence with

- measuring a first distance (13) to a first target point (10) by emitting a laser beam (7) in a first emission direction (8), and
- measuring a second distance (14) to a second target point (11) by emitting a laser beam (7) in a second emission direction (9),

and with capturing a series of images (51-55) by means of a camera with known camera optics having a global shutter as an aperture shutter, wherein the series of images (51-55) comprises at least a first target image (51) and a second target image (52) and further images (53-55) captured during movement of said camera between said first and second distance measurements, wherein

- the first target image (51) is captured with an image (10') of the first target point (10) at the same time as measuring the first distance (13), and
- the second target image (52) is captured with an image (11') of the second target point (11) at the same time as measuring the second distance (14),

**characterized in that**
the images (51-55) of the series have at least one common image area (56-59), and the method comprises

- setting the captured images (51-55) in relation to each other by means of the at least one common image area (56-59) and by means of feature extraction and image stitching, said setting containing a joining of the captured images (51-55) into a panoramic image, wherein recognized features are tracked during panning of the camera performed by aiming at the second target point, for which purpose further images are captured continuously or as required,
- a determination of a distance (16) between the images (10', 11') of the target points (10, 11) in the images (51-55) which are set in relation to one another, using a number of image points between the images (10', 11') of the target points (10, 11), wherein, by using the knowledge of the camera optics, a solid angle ($\alpha$) between the first emission direction (8) and the second emission direction (9) is determined from the distance (16) between the images (10', 11'), and

• a determination of the distance (15) between the target points (10, 11), wherein the distance (15) is calculated by means of the cosine theorem and by means of the measured distances (13, 14) to the target points (10, 11) and the solid angle ($\alpha$) between the first emission direction (8) and the second emission direction (9).

2. Method according to claim 1, **characterized in that** the number of image points between the images (10', 11') of the target points (10, 11) is a number of pixels.

3. Method according to one of claims 1 to 2, **characterized in that** the first target image (51) is captured substantially in the direction of the first emission direction (3) and the second target image (52) is captured substantially in the direction of the second emission direction (9).

4. Method according to claim 3, **characterized in that**

   • a horizontal plane (17) is defined on the basis of the coordinates of a target point (10), and a distance of a second target point (11) to this plane (17) is determined, and/or

   • using the coordinates of at least two target points (10, 11) a course of a straight line through two target points (10, 11) is determined, and a distance of a third target point or a parallel, which is defined by a third target point, to this straight line is determined.

5. Hand-held distance measuring device (1) having

   • a laser distance meter (20) for the measurement of distances (13, 14) to target points (10, 11) by means of a laser beam (7) emitted in an emission direction (8, 9),

   • an evaluation component (25) for deriving and providing the measured distances (13, 14), and

   • an image capturing unit (40) having at least one camera (41-44) comprising a global shutter as an aperture shutter for capturing a series of images (51-55), wherein a camera optics of the at least one camera (41-44) is known, wherein the series of images (51-55) comprises target images (51, 52) which

   • are detected in temporal relation, in particular simultaneously, with a measurement of a distance (13, 14) to a target point (10, 11) so that they can be linked to this distance (13, 14), and

   • comprise an image (10', 11') of the target point (10, 11),

   **characterized in that**

   the distance measuring device (1) has an image capturing and evaluation functionality, within the scope of which

   • the image capturing unit (40) captures a series of images (51-55) which comprise at least a first target image (51) captured simultaneously with a first measurement of a first distance (13) to a first target point (10) in a first emission direction (8) and a second target image (52) captured simultaneously with a second measurement of a second distance (14) to a second target point (11) in a second emission direction (9), and further images (53-55) captured during a movement of the camera between the first and second distance measurements, and in which each of the images (51-55) has a common image area (56-59) with at least one further image,

   • by evaluating the images (51-55) of the series by feature extraction and image stitching, an image evaluation unit (45) of the distance measuring device (1) correlates the first target image (51) and the second target image (52) by linking them to form a panoramic image (50), wherein recognized features are tracked during panning of the camera performed by aiming at the second target point, for which purpose further images are captured continuously or as required,

   • the image evaluation unit (45) is designed to determine, in the images (51-55), a distance (16) between the images (10', 11') of the first and second target point (10, 11) on the basis of a number of image points between the images (10', 11') of the first and second target point (10, 11), wherein a solid angle ($\alpha$) between the first emission direction (8) and the second emission direction (9) is determined from the distance (16) between the images (10', 11') by using the knowledge of the camera optics, and

   • the evaluation component (25) is designed for calculating the distance (15) by means of the cosine theorem and by means of the measured distances (13, 14) to the target points (10, 11) and the solid angle ($\alpha$) between the first emission direction (8) and the second emission direction (9).

6. Hand-held distance measuring device (1) according to claim 5, **characterized in that**

   • the first target image (51) has a common image area (56) with the second target image (52),

   • the first target image (51) and the second target image (52) each have a common image area (56, 59) with a further captured image (53) of the series, and/or
• the first target image (51) and the second target image (52) each have a common image area (56, 59) with a continuous sequence of further captured images (53-55) of the series defined by common image areas (57, 58).

**7.** Hand-held distance measuring device (1) according to claim 5 or 6, **characterized in that** the image capturing unit (40) has at least two, in particular three, cameras (41-44) and/or is configured

• to capture images (51-55) in the direction of an emission direction (8, 9),
• to capture target images (51, 52) as wide-angle images, in particular with an angle of at least 120°, and/or
• to capture images (51-55) simultaneously with multiple cameras (41-44).

**8.** Hand-held distance measuring device (1) according to one of claims 5 to 7, **characterized in that** the number of image points is a number of pixels.

**9.** Hand-held distance measuring device (1) according to one of claims 5 to 8, **characterized by**

• a homing camera with zoom functionality,
• input means (24), in particular a keypad, for selecting functions and/or
• a display (23), in particular a touch-sensitive display, for displaying

  ▪ images (51-55) captured by at least one camera (41-44) of the image capturing unit (40),
  ▪ joined panoramic images (50),
  ▪ measured distances (13, 14)
  ▪ calculated distances (15) and solid angle (α) and/or
  ▪ a live image taken by the homing camera.

**10.** Computer program product having program code stored on a machine-readable carrier for executing the method according to one of claims 1 to 4 when the program is executed on an electronic data processing unit formed as an evaluation component (25) of the distance measuring device (1) according to one of claims 5 to 9.

**Revendications**

**1.** Procédé pour déterminer une distance (15) entre deux points cibles (10, 11) avec une séquence de mesure avec

• la mesure d'une première distance (13) par rapport à un premier point cible (10) en émettant un faisceau laser (7) dans une première direction d'émission (8) et
• la mesure d'une seconde distance (14) par rapport à un second point cible (11) en émettant un faisceau laser (7) dans une seconde direction d'émission (9), et avec la détermination d'une série d'images (51-55) au moyen d'une caméra qui présente un obturateur global comme obturateur avec une optique de caméra connue, la série d'images (51-55) présentant au moins une première image cible (51) et une seconde image cible (52) ainsi que d'autres images (53-55) prises pendant un déplacement de la caméra entre la première et la seconde mesure de distance, cependant que
• la première image cible (51) est saisie avec une représentation (10') du premier point cible (10) en même temps que la mesure de la première distance (13) et
• la seconde image cible (52) est saisie avec une représentation (11') du second point cible (11) en même temps que la mesure de la seconde distance (14), **caractérisé en ce que**
les images (51-55) de la série présentent au moins une zone d'image commune (56, 59) et le procédé présente
• une mise en relation des images saisies (51-55) les unes par rapport aux autres, qui contient un assemblage des images saisies (51-55) en une image panoramique (50), au moyen de la au moins une zone d'image commune (56-59) et au moyen d'extraction de caractéristiques et d'assemblage d'images, cependant que des caractéristiques reconnues pendant un pivotement de la caméra exécuté par le ciblage du second point cible sont suivies, ce pour quoi d'autres images sont saisies en continu ou de manière adaptée aux besoins,
• la détermination d'une distance (16) entre les représentations (10', 11') des points cibles (10, 11) dans les images (51-55) mises en relation les unes par rapport aux autres à l'aide d'un nombre de points d'image entre les représentations (10', 11') des points cibles (10, 11), cependant qu'en ayant recours à la connaissance de l'optique de la caméra, un angle solide (α) entre la première direction d'émission (8) et la seconde direction d'émission (9) est déterminé à partir de la distance (16) entre les représentations (10', 11') et
• la détermination de la distance (15) entre les points cibles (10, 11), cependant que la distance (15) est calculée au moyen de la loi des cosinus et au moyen des distances mesurées (13, 14) par rapport aux points cibles (10, 11) et de l'angle solide (a) entre la première direction d'émission (8) et la seconde direction d'émission (9).

2. Procédé selon la revendication 1, **caractérisé en ce que** le nombre de points d'image (10', 11') entre les représentations (10', 11') des points cibles (10, 11) est un nombre de pixels.

3. Procédé selon l'une des revendications 1 à 2, **caractérisé en ce que** la saisie de la première image cible (51) se fait sensiblement en direction de la première direction d'émission (8) et la saisie de la seconde image cible (52) se fait sensiblement en direction de la seconde direction d'émission (9).

4. Procédé selon la revendication 3, **caractérisé en ce**

   • **qu'**un plan horizontal (17) est défini à l'aide des coordonnées d'un point cible (10) et une distance d'un second point cible (11) est déterminée par rapport à ce plan (17) et/ou
   • **que** l'allure d'une droite par deux points cibles (10, 11) est déterminée à l'aide des coordonnées d'au moins deux points cibles (10, 11) et une distance d'un troisième point cible ou d'une parallèle qui est définie par un troisième point cible est déterminée par rapport à cette droite.

5. Appareil de mesure de distance pouvant être tenu à la main (1) avec

   • un distancemètre laser (20) pour la mesure de distances (13, 14) par rapport à des points cibles (10, 11) au moyen d'un faisceau laser (7) émis dans une direction d'émission (8, 9),
   • une composante d'évaluation (25) pour dériver et mettre à disposition les distances mesurées (13, 14) et
   • une unité de saisie d'images (40) avec au moins une caméra (41-44) qui présente un obturateur global comme obturateur pour la saisie d'une série d'images (51-55), une optique de caméra de la au moins une caméra (41-44) étant connue,
   cependant que la série d'images (51-55) comprend des images cibles (51, 52) qui
   • sont saisies dans un rapport temporel, en particulier simultanément, avec la mesure d'une distance (13, 14) par rapport à un point cible (10, 11) si bien qu'elles peuvent être associées à cette distance (13, 14) et
   • présentent une représentation (10', 11' du point cible (10, 11) **caractérisé en ce que** l'appareil de distance de mesure (1) dispose d'une fonctionnalité de saisie et d'évaluation d'images dans le cadre de laquelle
   • l'unité de saisie d'images (40) saisit une série d'images (51-55) qui présente au moins une première image cible (51) qui est saisie simultanément avec une première mesure d'une première distance (13) par rapport à un premier point cible (10) dans une première direction d'émission (8) et une seconde image cible (52) qui est saisie simultanément avec une seconde mesure d'une seconde distance (14) par rapport à un second point cible (11) dans une seconde direction d'émission (9) ainsi que d'autres images (53-55) prises pendant un déplacement de la caméra entre la première et la seconde mesure de distance et dans laquelle chacune des images (51-55) présente une zone d'image commune (56-59) avec au moins une autre image,
   • une unité d'évaluation d'images (45) de l'appareil de mesure de distance (1) met en relation, par évaluation des images (51-55) de la série au moyen d'extraction de caractéristiques et d'assemblage d'images, la première image cible (51) et la seconde image cible (52) l'une par rapport à l'autre en une image panoramique (50) par association, cependant que des caractéristiques reconnues sont suivies pendant un pivotement de la caméra qui est exécuté par ciblage du second point cible, ce pour quoi d'autres images sont saisies en continu ou de manière adaptée aux besoins,
   • l'unité d'évaluation d'images (45) est configurée pour déterminer dans les images (51-55) une distance (16) entre les représentations (10', 11') du premier point cible et du second point cible (10, 11) à l'aide d'un nombre de points d'image entre les représentations (10', 11') du premier point cible et du second point cible (10, 11), cependant qu'en ayant recours à la connaissance de l'optique de la caméra, un angle solide (a) entre la première direction d'émission (8) et la seconde direction d'émission (9) est déterminé à partir de la distance (16) entre les représentations (10', 11') et
   • la composante d'évaluation (25) est configurée pour le calcul de la distance (15) au moyen de la loi des cosinus et au moyen des distances mesurées (13, 14) par rapport aux points cibles (10, 11) et de l'angle solide (a) entre la première direction d'émission (8) et la seconde direction d'émission (9).

6. Appareil de mesure de distance pouvant être tenu à la main (1) selon la revendication 5, **caractérisé en ce que**

   • la première image cible (51) présente une zone d'image commune (56) avec la seconde image cible (52),
   • la première image cible (51) et la seconde image cible (52) présentent respectivement une zone d'image commune (56, 59) avec une autre image saisie (53) de la série et/ou
• la première image cible (51) et la seconde image cible (52) présentent respectivement une zone d'image commune (56, 59) avec une séquence continue d'autres images saisies (53, 55) de la série qui est définie par des zones d'image communes (57, 58).

7. Appareil de mesure de distance pouvant être tenu à la main (1) selon la revendication 5 ou 6, **caractérisé en ce que** l'unité de saisie d'images (40) présente au moins deux, en particulier trois, caméras (41-44) et/ou est configurée pour

• saisir des images (51-55) dans la direction d'une direction d'émission (8, 9),
• de saisir des images cibles (51, 52) comme images grand angle, en particulier avec un angle d'au moins 120° et/ou
• saisir des images (51-55) en même temps avec plusieurs caméras (41, 44).

8. Appareil de mesure de distance pouvant être tenu à la main (1) selon l'une des revendications 5 à 7, **caractérisé en ce que** le nombre de points d'image est un nombre de pixels.

9. Appareil de mesure de distance pouvant être tenu à la main (1) selon l'une des revendications 5 à 8, **caractérisé par**

• une caméra de recherche de cible avec une fonctionnalité de zoom,
• des moyens d'entrée (24), en particulier un clavier, pour sélectionner des fonctions et/ou
• un écran (23), en particulier tactile, pour l'affichage

• d'images prises (51-55) au moyen de la au moins une caméra (41-44) de l'unité de saisie d'images (40),
• d'images panoramiques assemblées (50),
• de distances mesurées (13, 14),
• de distances (15) et d'angles solides ($\alpha$) calculés
et/ou
• d'une image en direct prise par la caméra de recherche de cible.

10. Produit programme d'ordinateur avec un code de programme qui est mémorisé sur un support lisible par machine pour l'exécution du procédé selon l'une des revendications 1 à 4, lorsque le programme est exécuté sur une unité de traitement électronique des données configurée comme composante d'évaluation (25) de l'appareil de mesure de distance (1) selon l'une des revendications 5 à 9.

Fig. 1a

Fig. 1b

EP 2 669 707 B1

Fig. 2

Fig. 3

Fig. 4

24

23

1

21

22

41

*Fig. 5a*

24

23

1

21

42

22

41

*Fig. 5b*

24

23

1

21

22

44

43

41

*Fig. 5c*

*Fig. 6a*

*Fig. 6b*

Fig. 7a

Fig. 7b

**Fig. 8**

**Fig. 9**

Fig. 10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0738899 A
- EP 0701702 A
- DE 102007043496 A1
- JP 2008116249 A
- DE 10214742 A1
- WO 0250564 A